**Europäisches Patentamt**

**European Patent Office**

**Office européen des brevets**

(19)

(11) Veröffentlichungsnummer: **0 089 663**
A2

(12) # EUROPÄISCHE PATENTANMELDUNG

(21) Anmeldenummer: 83102785.9

(22) Anmeldetag: 21.03.83

(51) Int. Cl.³: **B 29 D 27/00**
 **B 29 D 27/04**

(30) Priorität: 24.03.82 HU 89682

(43) Veröffentlichungstag der Anmeldung:
 28.09.83 Patentblatt 83/39

(84) Benannte Vertragsstaaten:
 AT BE CH DE FR GB IT LI LU NL SE

(71) Anmelder: Eszakmagyarországi Vegyimüvek

 H-3792 Sajobábony(HU)

(72) Erfinder: Fejes, János
 Erkel F. utca 19
 Sajobabony(HU)

(72) Erfinder: Nemeth, Lászlo
 Erkel F. utca 8
 Sajóbábony(HU)

(72) Erfinder: Gyurjan, Vladimir
 Patak utca 12
 Miskolc(HU)

(72) Erfinder: Salamon, Zoltán
 Erkel F. utca 16
 Sajobábony(HU)

(72) Erfinder: Héczei, István
 Kossuth utca 10
 Sajobábonyi(HU)

(72) Erfinder: Agocs, Arpad
 Bányász utca 4/1
 Sajoszentpéter(HU)

(72) Erfinder: Gaspar, Lászlo
 Stadion utca 67
 Miskolc(HU)

(74) Vertreter: Ebbinghaus, Dieter et al,
 v. FÜNER, EBBINGHAUS, FINCK Patentanwälte
 European Patent Attorneys Mariahilfplatz 2 & 3
 D-8000 München 90(DE)

(54) **Verfahren und Gerät zur Regelung der Querschnittsgestaltung von freischäumenden Polymeren, hauptsächlich von Polyurethanen.**

(57) Für die Regelung der Querschnittsgestaltung von freischäumenden Polymeren, hauptsächlich Polyurethanen bei der Herstellung von Schaumblöcken wird mit Hilfe der zwischen der Oberfläche des Polymers und einem darüber angeordneten Regelschirm strömenden Gase ein Druckunterschied hergestellt, dessen Wert durch Grobregelung in die Nähe eines Arbeitspunktes in einem Bereich von max. 10 mm WS, zweckmäßig 2-6 mm WS, gebracht wird. Der Wert des Druckunterschiedes wird durch Feinregelung, die die Menge der strömenden Luft durch die Einführung von falscher Luft ändert, in einem in der Nähe dieses Arbeitspunktes stabiliserten Zustand innerhalb einer Grenze von ± 0,1 mm WS gehalten.

Für das Gerät zur Durchführung des obigen Verfahrens ist kennzeichnend, daß ein Regelschirm (1) eine verschiebbare oder kippbare Kiemenplatte (10) besitzt, deren Steuerorgan mit dem auf den Regelschirm montierten Druckfühler des Feinregelkreises elektrisch verbunden ist, während das Steuerorgan des verschiebbar oder kippbar aufgehängten Regelschirmes elektrisch an den mit der Kiemenplatte verbundenen Lagefühler des Grobregelungskreises angeschlossen ist.

Die erfindungsgemäße Lösung ermöglicht neben einer betriebssicheren Funktion eine Regelung mit außerordentlich hoher Genauigkeit und dadurch eine ideale Querschnittsgestaltung, was den Materialverlust auf ein Minimum senkt.

EP 0 089 663 A2

./...

Fig . 1

v. FÜNER    EBBINGHAUS    0089663

PATENTANWÄLTE    EUROPEAN PATENT ATTORNEYS

MARIAHILFPLATZ 2 & 3, MÜNCHEN 90
POSTADRESSE: POSTFACH 95 01 60, D-8000 MÜNCHEN 95

ÉSZAKMAGYARORSZÁGI VEGYIMÜVEK                    EPAB-30663.8
                                                21. März 1983

VERFAHREN UND GERÄT ZUR REGELUNG DER QUERSCHNITTSGESTALTUNG
VON FREISCHÄUMENDEN POLYMEREN, HAUPTSÄCHLICH VON POLY-
URETHANEN

Die Erfindung betrifft ein Verfahren und ein Gerät zur Regelung der Querschnittsgestaltung von freischäumenden Polymeren, hauptsächlich Polyurethanen, wobei durch Gas, das zwischen der Oberfläche des in einer Mulde schäumenden Polymers und einem darüber angeordneten Regelschirm strömt, hauptsächlich durch Luft der zwischen den Rändern und der Mitte der Mulde entstandene Druckunterschied durch Änderung der Menge und/oder des Querschnittes des strömenden Gases geregelt wird.

Bei der Herstellung von Kunststoff-, hauptsächlich Polyurethanschaumblöcken in einem kontinuierlichen blockschaumbildenden Gerät bedeutete es oft ein Problem, daß sich der obere Teil der in der Mulde des Gerätes freischäumenden Blöcke bei der Formung wölbte. Diese Wölbung mußte am Ende der Produktion abgeschnitten werden und verursachte daher einen bedeutenden Materialverlust. Um das zu verhindern, wurde vorgeschlagen, zwischen den äußeren und mittleren Zonen der oberen Grenzfläche des Schaumblockes mit Hilfe einer Gasströmung, zweckmäßig Luftströmung, einen Druckunterschied herzustellen. Die DE-OS 2 101 238 beschreibt z.B. eine Lösung, bei der das obige Verfahren mit einem Gerät durchgeführt werden soll, das gasbewegende und gasleitende Organe, z.B. einen Ventilator und einen verstellbaren Regelschirm, aufweist. Der Regelschirm ist gegebenenfalls auch mit einer Kiemenplatte ausgerüstet, was eine feinere Regelung der Menge des Gasstromes und dadurch des aufrechterhaltenen Druckunterschiedes ermöglicht. Der zweckmäßige Wert des aufrechterhaltenen Druckunterschiedes beträgt nach der erwähnten DE-OS 5-30 mm WS. In der Praxis zeigte sich jedoch, daß dieser zweckmäßige Wert noch niedriger ist und 3-4 mm WS bei ganz geringer Abweichung beträgt. Der Grund dafür besteht darin, daß die Oberfläche des aus der Flüssigkeit schäumenden Stoffes kein elastischer Film, sondern auf einer guten Strecke noch flüssig ist, und dessen Partikel durch das Saugen etwa über 10 mm WS in den Regelschirm gelangen können. Gleichzeitig bleibt, wenn das Aussaugen nicht ausreichend parallel zur Seitenwand erfolgt, der obere Teil des Blocks gewölbt. Das Verfahren zur Gestaltung von viereckigen Blöcken ist also gegenüber einer Änderung des Druckunterschiedes sehr empfindlich, und deshalb muß der Druckunterschiedswert in einem sehr kleinen Druckänderungsbereich (zweckmäßig $\pm$ 0,1 mm WS) stabilisiert werden. Diese Aufgabe konnte mit den bisherigen Geräten nicht gelöst werden, da deren manuelle Regelung zu ungenau und schwerfällig ist, und nicht das rechtzeitige und empfindliche Annähern des beweglichen Regelschirms an die Oberfläche sowie beim Notabstellen das schnelle Herausheben bzw. Entfernen des Schirmes aus der schäumenden Oberfläche ermöglicht. Außerdem kann auch der voneinander unabhängige oder abgestimmte Betrieb der zwei an den zwei Seiten der Mulde befindlichen, gesondert regelnden Schirme durch manuelle Regelung nicht gesichert werden.

Die durch die Erfindung zu lösende Aufgabe besteht also in der Schaffung eines Verfahrens und eines Gerätes, die die erwähnten Mängel der bekannten Verfahren und der bekannten Geräte beseitigt und eine Regelung der für die Querschnittsgestaltung von freischäumenden Polymeren notwendigen niedrigen Druckunterschiede innerhalb enger Schwankungsgrenzen
löst.

Erfindungsgemäß wird die gestellte Aufgabe dadurch gelöst,
daß durch den Querschnitt des strömenden Gases ändernde
Grobregelung der Druckunterschied in die Nähe eines Arbeitspunktes in einem Bereich von max. 10 mm WS, zweckmäßig
2-6 mm WS, gebracht wird und er durch Feinregelung, die die
Menge des strömenden Gases durch die Einführung von falscher
Luft ändert, in einem in der Nähe dieses Arbeitspunktes stabilisierten Zustand innerhalb einer Grenze von $\pm$ 0,1 mm WS
gehalten wird, wobei bei der Feinregelung durch das von der
kontinuierlichen Messung des Druckes des strömenden Gases
erhaltene Stellsignal die Lage der die falsche Luft einlassenden Kiemenplatte im Verhältnis zum Regelschirm geändert
wird, bei der Grobregelung hingegen die Lage des Regelschirmes im Verhältnis zur Oberfläche des Polymers durch das Lagesignal der Kiemenplatte des Regelschirmes als Stellsignal
geändert wird.

Erfindungsgemäß ist es zweckmäßig, wenn das Lagesignal der
Kiemenplatte des Regelschirmes aus dem Unterschied der die
zweckmäßige bzw. tatsächliche Stellung des Stellorganes
der Feinregelung wiederspiegelnden Signale gebildet wird,
entlang den zwei Rändern der Mulde hingegen die Menge und
der Querschnitt des strömenden Gases je Rand unabhängig voneinander geändert werden.

Das Gerät zur Durchführung des erfindungsgemäßen Verfahrens,
das mindestens einen an einen Regelkreis(e) angeschlossenen
Regelschirm sowie gegebenenfalls eine Steuereinheit aufweist,
ist so gestaltet, daß der Regelschirm über eine verschiebbar
oder kippbar gelagerte Kiemenplatte verfügt, deren Steuerorgan mit dem auf den Regelschirm montierten Druckfühler des Feinregelkreises elektrisch verbunden ist. Das Steuerorgan des mindestens in einer Richtung verschiebbar oder kippbar aufgehängten Regelschirms ist elektrisch an den mit der Kiemenplatte verbundenen Lagefühler des Grobregelkreises angeschlossen.

Weitere Einzelheiten der Erfindung werden anhand der Zeichnung beschrieben, die ein Beispiel eines erfindungsgemäßen Gerätes darstellt. In der Zeichnung stellen

Fig. 1   das räumliche Schema eines Teils des Gerätes, und

Fig. 2   das prinzipielle Schema des Regelkreises dar.

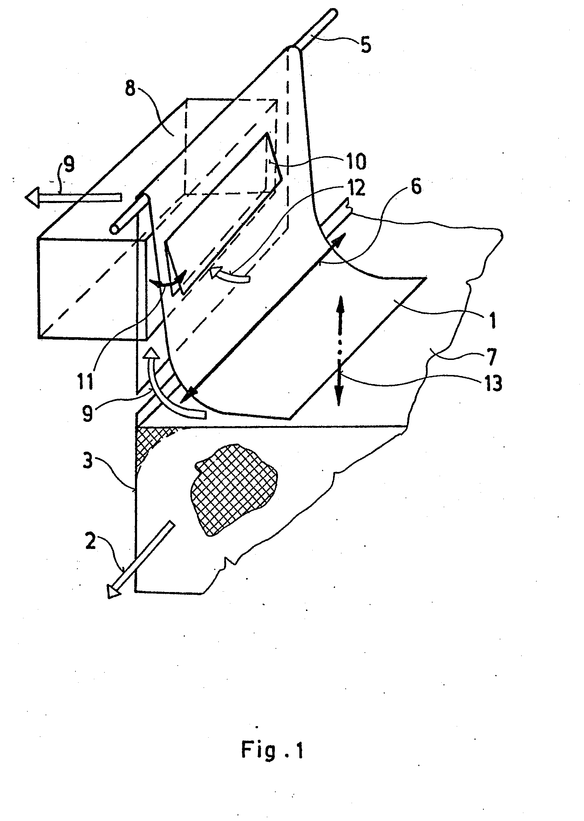

In Fig. 1  wurde das räumliche Schema eines Teils des erfindungsgemäßen Gerätes dargestellt, wo der Regelschirm 1 - dessen strömungstechnische Gestaltung nicht Gegenstand der vorliegenden Anmeldung ist - entlang des Randes einer sich in Richtung des weißen Pfeiles 2 bewegenden Mulde 3  der gesteuerten Blockschaumbildungsmaschine, über dem schäumenden Polymer 4 angeordnet ist. Die Oberfläche 7 des Polymers 4 steigt entlang des Pfeils 2 verlaufend nach oben hin an.

Der Regelschirm 1 ist auf einer Schiene 5 in Richtung eines Doppelpfeils 6 verschiebbar geführt, wobei die Achse der Schiene 5 mit der Tangentenebene der Oberfläche 7 des Polymers 4 einen spitzen Winkel einschließt.

Ein auf der Rückseite des Regelschirms 1 befindlicher Stutzen 8 ist mit einer nicht dargestellten Gaslieferungsmaschine, vorteilhaft mit einem saugenden Ventilator verbunden. Die den zur Querschnittsgestaltung des Polymers 4 notwendigen Druckunterschied verursachende Strömung des Gases, hauptsächlich von Luft, ist durch weiße Pfeile 9 verdeutlicht.

Auf der Vorderseite des Regelschirmes 1 ist koaxial zum Stutzen 8 eine Kiemenplatte 10 angeordnet, die im vorliegenden Fall in Richtung eines Doppelpfeiles 11 kippbar gelagert ist. Die mit Hilfe der die Menge des durch den Pfeil 9 gekennzeichneten Hauptstromes der die Druckabnahme hervorrufenden Luft ändernden, in offener Stellung befindlichen Kiemenplatte 10 in den Innenraum von Regelschirm 1 eintretende sekundäre Luft ist durch einen weißen Pfeil 12 markiert.

Schließlich ist das zum Beginnen und Beenden des Regelns notwendige, weiterhin das beim Austreten des Stellsignals des Notabstellens, Stromausfalls sowie der Automatik aus dem Steuerbereich erfolgende Verschieben durch einen Doppelpfeil 13 gekennzeichnet.

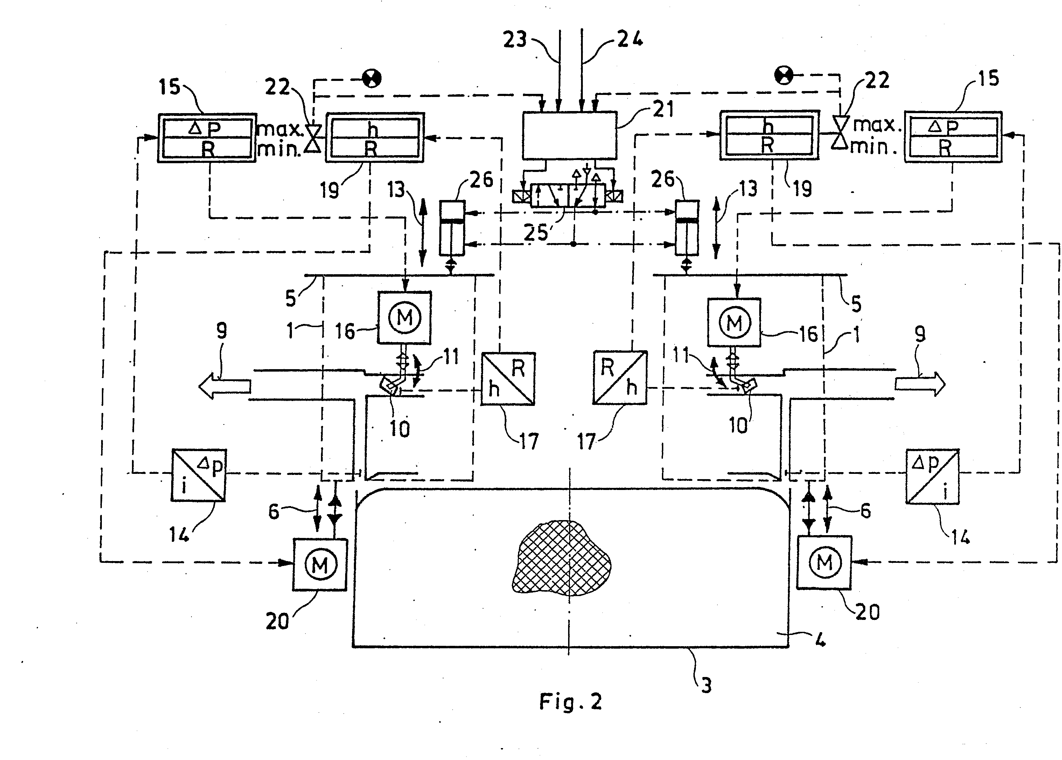

In Fig. 2 ist das Prinzipschaltbild einer erfindungsgemäßen Regelanordnung in einem solchen Fall dargestellt, in dem entlang der zwei Ränder der Mulde 3 eine unabhängige Regelung erfolgt, der Regelschirm 1 jedoch zusammen mit den darauf angeordneten Elementen symbolisch durch eine unterbrochene Linie gezeichnet wurde.

Mit dem Regelgerät nach Fig. 2 können Fein- und Grobregelung, weiterhin die zum Anlassen und Abstellen sowie die für einen außerordentlichen Eingriff notwendige Steuerung durchgeführt werden.

Der Druckfühler 14 des Feinregelungskreises, im vorliegenden Fall ein Doppeldraht-Druckunterschiedferngeber, befindet sich zwischen dem Regelschirm 1 und der Oberfläche des Polymers 4 und ist auf dem Regelschirm 1 montiert. Der Druckfühler 14 ist durch einen PID-Regler 15 mit dem Steuerorgan 16 der Kiemenplatte 10, im vorliegenden Fall mit einem Becherservomotor, verbunden, dessen abregelnder Antrieb mechanisch an die Kiemenplatte 10 angeschlossen ist.

Der Lagefühler 17 des Grobregelungskreises, im vorliegenden Fall ein Potentiometer, das die Lage angibt, ist mechanisch an die Kiemenplatte 10 und elektrisch an einen PID-Regler 19 angeschlossen. Der PID-Regler 19 ist mit dem Steuerorgan 20 des Regelschirms 1, im vorliegenden Fall mit einem Becherservomotor, verbunden, dessen abregelnder Antrieb mechanisch an den Regelschirm 1 angeschlossen ist.

Der Grobregelungskreis ist an die Steuereinheit 21 des Gerätes durch einen Kontakt 22 angeschlossen, der bei einem vorher eingestellten Grenzwert der Regelabweichung des Regelungskreises den unteren oder oberen Grenzwert angibt.

Die Eingänge 23 und 24 der Steuereinheit 21 sind dem Notabstellsignal bzw. dem Stromausfallsignal zugeordnet.

An die Steuereinheit 21 ist auch ein Vierweg-Magnetventil 25 angeschlossen, das die zweckmäßig pneumatischen Arbeitszylinder 26 steuert, auf deren Kolbenstange die Schienen 5 des Regelschirmes 1 aufgehängt sind.

Die erfindungsgemäße Lösung ermöglicht die Regelung der für die Querschnittsgestaltung von freischäumenden Polymeren notwendigen niedrigen Druckunterschiede innerhalb von engen Schwankungsgrenzen und dadurch die Herstellung von Schaumblöcken, die wirtschaftlicher und betriebssicherer als bisher ist.

VERFAHREN UND GERÄT ZUR REGELUNG DER QUERSCHNITTSGESTALTUNG
VON FREISCHÄUMENDEN POLYMEREN, HAUPTSÄCHLICH VON POLY-
URETHANEN

Patentansprüche:

1. Verfahren zur Querschnittgestaltung von freischäumenden Polymeren, hauptsächlich Polyurethanen, wobei durch Gas, das zwischen der Oberfläche des in einer Mulde schäumenden Polymers und einem darüber angeordneten Regelschirm strömt, hauptsächlich durch Luft der zwischen den Rändern und der Mitte der Mulde entstandene Druckunterschied durch eine Änderung der Menge und/oder des Querschnitts des strömenden Gases geregelt wird, dadurch g e k e n n z e i c h n e t , daß durch den Querschnitt des strömenden Gases ändernde Grobregelung der Druckunterschied in die Nähe eines Arbeitspunktes in einem Bereich von max. 10 mm WS, zweckmäßig 2-6 mm WS, gebracht wird und er durch Feinregelung, die die Menge des strömenden Gases durch die Einführung von falscher Luft ändert, in einem in der Nähe dieses Arbeitspunktes stabilisierten Zustand innerhalb einer Grenze von $\pm$ 0,1 mm WS gehalten wird, wobei bei der Feinregelung durch das von der kontinuierlichen Messung des Druckes des strömenden Gases erhaltene Stellsignal die Lage der die falsche Luft einlassenden Kiemenplatte im Verhältnis zum Regelschirm geändert wird, bei der Grobregelung hingegen die Lage des Regelschirms im Verhältnis zur Oberfläche des Polymers durch das Lagesignal der Kiemenplatte des Regelschirms als Stellsignal geändert wird.

2. Verfahren nach Anspruch 1, dadurch g e k e n n - z e i c h n e t , daß das Lagesignal der Kiemenplatte des Regelschirmes aus dem Unterschied der die zweckmäßige bzw. tatsächliche Stellung des Stellorgans der Feinregelung wiederspiegelnden Signale gebildet wird.

3. Verfahren nach Anspruch 1 oder 2, dadurch g e - k e n n z e i c h n e t , daß entlang den zwei Rändern der Mulde die Menge und der Querschnitt des strömenden Gases je Rand unabhängig voneinander geändert werden.

4. Gerät zur Durchführung des Verfahrens nach Anspruch 1, mit mindestens einem an einen Regelkreis(e) angeschlossenen Regelschirm sowie gegebenenfalls einer Steuereinheit, dadurch g e k e n n z e i c h n e t , daß der Regel- schirm (1) über eine verschiebbar oder kippbar gelagerte Kiemenplatte (10) verfügt, deren Steuerorgan (16) mit dem auf den Regelschirm (1) montierten Druckfühler (14) des Feinregelkreises elektrisch verbunden ist, und daß das Steuerorgan (20) des mindestens in einer Richtung verschiebbar oder kippbar aufgehängten Regelschirmes (1) elektrisch an den mit der Kiemenplatte (10) verbundenen Lagefühler (17) des Grobregelkreises angeschlossen ist.

5. Gerät nach Anspruch 4, dadurch g e k e n n z e i c h - n e t , daß sich der Druckfühler (14) des Feinregelkreises zwischen der Oberfläche des schäumenden Polymers (7) und dem Regelschirm (1) befindet und er zweckmäßig durch einen PID-Regler (15) mit dem Steuerorgan (16) der Kiemenplatte (10), zweckmäßig mit einem Elektromotor, elektrisch verbunden ist.

6. Gerät nach Anspruch 4, dadurch g e k e n n z e i c h - n e t , daß der Druckfühler (17) des Grobregelkreises zweckmäßig durch einen PID-Regler (19) mit dem Steuerorgan (20) des Regelschirmes (1), zweckmäßig mit einem Elektromotor verbunden ist.

7. Gerät nach Anspruch 6, dadurch g e k e n n z e i c h - n e t , daß der Regelschirm (1) auf einer Schiene (5) aufgehängt ist, deren Achse mit der Tangentenebene der Oberfläche (7) des schäumenden Polymers einen spitzen Winkel einschließt.

8. Gerät nach Anspruch 7, dadurch g e k e n n z e i c h - n e t , daß die Schiene (5) mit der senkrechten oder fast senkrechten Kolbenstange eines zweckmäßig pneumatischen Arbeitszylinders (26) verbunden ist, wobei der Arbeitszylinder (26) über ein Vierwege-Magnetventil (25) an die Steuereinheit (21) angeschlossen ist.

Fig.1

EPAB-30663.8
0089663

Fig. 2